Europäisches Patentamt

European Patent Office

Office européen des brevets

(19)

(11) Veröffentlichungsnummer: **0 120 237 B1**

(12) **EUROPÄISCHE PATENTSCHRIFT**

(45) Veröffentlichungstag der Patentschrift:
07.01.87

(51) Int. Cl.⁴: **C 04 B 22/06**, C 04 B 22/10

(21) Anmeldenummer: **84101181.0**

(22) Anmeldetag: **06.02.84**

(54) **Flüssiger Erstarrungsbeschleuniger für Betonabmischungen.**

(30) Priorität: **24.02.83 DE 3306448**

(43) Veröffentlichungstag der Anmeldung:
**03.10.84 Patentblatt 84/40**

(45) Bekanntmachung des Hinweises auf die Patenterteilung:
**07.01.87 Patentblatt 87/2**

(84) Benannte Vertragsstaaten:
**AT BE CH DE FR GB IT LI LU NL SE**

(56) Entgegenhaltungen:
**AT - B - 192 838
CS - A - 47 251
DE - A - 2 445 512
FR - A - 1 056 100
FR - A - 2 314 904**

(73) Patentinhaber: **DYNAMIT NOBEL
AKTIENGESELLSCHAFT, Postfach 1209,
D-5210 Troisdorf, Bez. Köln (DE)**

(72) Erfinder: **Allemann, Kurt, Dr., Kaisereggstrasse,
Schmitten RF (CH)**
Erfinder: **Deneke, Klaus, Dr., Im Wiesengrund 54,
D-5210 Troisdorf (DE)**
Erfinder: **Hass, Hansjürgen, Dr., Telegrafstrasse 27,
D-5210 Troisdorf (DE)**
Erfinder: **Vogel, Günter, Zum Scherbusch 45,
D-5202 Hennef 41 (DE)**

## Beschreibung

Gegenstand der vorliegenden Erfindung ist ein flüssiger Erstarrungsbeschleuniger für Betonabmischungen aus Alkalialuminaten, Alkalihydroxiden und Alkalicarbonaten. Weiterer Gegenstand der Erfindung ist die Verwendung dieses neuen Erstarrungsbeschleunigers in hydraulischen Bindemitteln auf Basis von Portlandzementen zur Beschleunigung der Abbindung und Erstarrung dieser Bindemittel und zur Aufrechterhaltung der Druckfestigkeit der mit Hilfe dieser Bindemittel hergestellten Produkte.

Es ist z.B. aus der DE-OS 2 445 512 bekannt, wässrige Lösungen von Natriumaluminat zur Beschleunigung des Abbindens von Betonabmischungen einzusetzen. Diese Natriumaluminatlösungen haben aber den Nachteil, dass sie nur innerhalb einer bestimmten Konzentration einsetzbar sind, weil sonst Konzentrationsniederschläge ausfallen und die Lösungen damit dann nicht mehr über eine Spritzdüse einsetzbar sind und auch dann nicht mehr die gewünschten Wirkungen zeigen. Die naheliegende Lösung dieses Problems, verdünnte Lösungen einzusetzen ist deshalb nicht angebracht, weil bei einer Verdünnung die Gefahr der qualitätsmindernden Hydrolyse des Aluminats besteht.

Zur Behebung des Ausfallens von Niederschlägen wird deshalb in der DE-OS 2 445 512 vorgeschlagen, dem flüssigen Beschleuniger Natriumgluconat unterzumischen, das stabilisierend auf die Aluminatlösung wirkt. Der Zusatz von Gluconaten oder anderen hydroxylgruppenhaltigen Verbindungen hat aber den Nachteil, dass dadurch z.B. die Erstarrungs-Abbindebeschleunigung verzögert wird und ein Auftreten von Niederschlägen, z.B. bei konzentrierten Lösungen, unter extremen Temperaturbedingungen auch nicht verhindert werden kann.

Es ist weiterhin bekannt, Erstarrungsbeschleunigern auf Basis von Natriumaluminatlösungen Kaliumcarbonat zur Verbesserung ihrer Eigenschaften hinzuzufügen. Dies führt aber auch nur im beschränkten Umfang zu lagerstabilen Lösungen, weil, besonders bei konzentrierten Lösungen, im Laufe der Zeit aus solchen Lösungen Alkalicarbonate ausfallen, wodurch wiederum die oben genannten Schwierigkeiten auftreten.

Das schnelle Abbinden von Betonabmischungen hat aber den Nachteil, dass ein solchermassen abgebundener Beton im weiteren Erstarrungsverlauf an Frühfestigkeit verliert. Diese Minderung der Druckfestigkeit im Verlauf von 28 Tagen ist um so grösser, je schneller die Betonmischung abbindet.

Es bestand also die Aufgabe, einen Erstarrungsbeschleuniger für Betonabmischungen aufzufinden, der in flüssiger Form vorliegt und der das Alkalialuminat in möglichst konzentrierter Form enthält. Weiterhin sollen diese Lösungen möglichst lagerstabil sein, keine Ausfällungen während einer mehrwöchentlichen Lagerung ergeben, wobei diese Lagerstabilität möglichst ohne Zusatz von organischen Komplexbildnern erhalten werden soll. Die Erstarrungsbeschleuniger sollten weiterhin die Betonabmischungen in der Weise beeinflussen, dass diese schnell abbinden und erstarren, wobei jedoch nach Möglichkeit kein oder nur ein geringer Druckabfall der erhaltenen Festkörper im Verlauf der Früherhärtung eintreten soll.

In Erfüllung dieser Aufgabe wurde nun ein flüssiger Erstarrungsbeschleuniger für Betonabmischungen mit den im Patentanspruch 1 genannten Merkmalen gefunden, der besonders zur beschleunigten Härtung von Betonabmischungen auf Basis von Portlandzementen eingesetzt werden kann und in den aus diesen Betonabmischungen hergestellten Produkten eine Verminderung des Abfalls der Druckfestigkeit bewirkt.

Die neuen Beschleuniger zeigen bei an sich bekannten Beton- und Mörtelabmischungen in Mengen ab 0,5 Gew.-%, bezogen auf den Zement, eine beschleunigende Wirkung. Die Zusatzmenge richtet sich u.a. nach der Temperatur des Gemischs im Augenblick seiner Applikation. Bei niederen Temperaturen sind höhere Dosierungen notwendig als bei höheren Temperaturen. Im allgemeinen werden die neuen Beschleuniger diesen Abmischungen in Mengen zwischen 2 und 6 Gew.-%, bezogen auf den Zement, zugesetzt.

Der neue Erstarrungsbeschleuniger enthält im Gegensatz zu den bekannten Erstarrungsbeschleunigern nur die Kaliumverbindungen der genannten Salze. Dabei muss die Gesamtmenge an KOH innerhalb definierter Grenzen in einem bestimmten Verhältnis zu der Menge an Kaliumaluminat stehen. Die Gesamtmenge an KOH setzt sich aus den Teilmengen, die auf das Kaliumaluminat und Kaliumcarbonat entfalten, sowie dem freien KOH, zusammen. Zweckmässigerweise wird sie als $K_2O$ angegeben, da Kaliumaluminat im Idealfall der Formel $K_2O \cdot Al_2O_3$ entspricht.

Die erfindungsgemässe Lösung enthält einen begrenzten Überschuss an $K_2O$. Definitionsgemäss soll unter diesem Überschuss die Menge an $K_2O$ verstanden werden, die weder dem Aluminat noch dem Carbonat stöchiometrisch zuzurechnen ist.

Das unter a) im Anspruch 1 genannte Verhältnis kann auch mathematisch ausgedrückt werden als die Differenz zwischen der gesamten molaren Konzentration an $K_2O$ und der Konzentration an $CO_2$ (aus dem Kaliumcarbonat) zu dem gelösten $Al_2O_3$ (aus dem Aluminat). Es lässt sich ausdrücken als $[K_2O] - [CO_2] / [Al_2O_3]$. Dieses Verhältnis wird auch als kaustisches Verhältnis bezeichnet. Es liegt erfindungsgemäss zwischen 1,1 und 1,4, vorzugsweise zwischen 1,25 und 1,37.

Der Gehalt an Wasser in der erfindungsgemässen Lösung wird ebenfalls auf die Konzentration des gelösten $Al_2O_3$ (aus dem Kaliumaluminat) bezogen. Mathematisch ausgedrückt ist es das molare Verhältnis $[H_2O] / [Al_2O_3]$. Dieses Verhältnis liegt erfindungsgemäss zwischen 9,5 und 20, vorzugsweise zwischen 14 und 17.

Innerhalb der beanspruchten Grenzen kann der Gehalt an $K_2CO_3$ weit variiert werden; als Obergrenze ist ein Wert von 3,4 Mol-% $CO_2$ nach Möglichkeit nicht zu überschreiten, während die Minimalmengen über 0,1 Mol-% $CO_2$ liegen sollen. Die bevorzugten Grenzen liegen zwischen 2 und 3 Mol-%.

Lösungen innerhalb der beanspruchten Grenzen enthalten eine grössere Menge an Salzen gelöst, ohne dass Konzentrationsniederschläge auftreten, als vergleichbare Gemische, bei denen die gleiche Alkalikonzentration aus $Na_2O$ oder einem Gemisch aus $Na_2O$ und $K_2O$ besteht.

Die Herstellung der erfindungsgemässen Erstarrungsbeschleuniger erfolgt zweckmässigerweise in der Weise, dass man eine alkalische Kaliumaluminatlösung mit Kaliumcarbonat versetzt. Als Kaliumaluminatlösung wird dabei vorzugsweise eine solche eingesetzt, die durch Aufschluss von Tonerdehydrat mit KOH erhalten wurde. Der Aufschluss kann dabei sowohl in der Schmelze als auch mit wässriger KOH erfolgen. Das Verhältnis der eingesetzten Kalilauge zu dem Tonerdehydrat soll dabei immer so gewählt werden, dass das molare Verhältnis von $K_2O : Al_2O_3$ zwischen 1,1 : 1 und 1,4 : 1 liegen soll. Wenn der Aufschluss mit wässriger Kalilauge erfolgt, werden vorzugsweise Lösungen mit einer Konzentration über 30 Gew.-% an KOH eingesetzt. Besonders geeignet sind Lösungen mit einer Konzentration über 38 Gew.-% KOH.

Wenn der Aufschluss des Tonerdehydrats in der Schmelze erfolgt, wird die Schmelze bzw. das Kaliumaluminat mit soviel Wasser aufgenommen, dass eine möglichst gesättigte Lösung erhalten wird.

In beiden Aufschlussfällen wird die erhaltene Lösung mit Kaliumcarbonat versetzt. Das Kaliumcarbonat kann dabei sowohl als festes Sesquihydrat oder als konzentrierte wässrige Lösung eingesetzt werden. Die insgesamt zugefügte Wassermenge muss dabei so gewählt werden, dass das molare Verhältnis $H_2O : Al_2O_3$ zwischen 9,5 : 1 und 20 : 1 liegt.

Die auf diese Weise erhaltene Lösung kann unerwünschte Umsetzungsprodukte enthalten, die z.B. als Kristallisationskeime wirken und/oder im Laufe der Zeit zu störenden Ausfällungen führen. Es ist deshalb empfehlenswert, solche unerwünschten Umsetzungsprodukte aus den Lösungen zu entfernen. Dies kann zu jedem beliebigen Zeitpunkt während oder nach dem Herstellungsprozess auf an sich bekannte Weise wie z.B. Filtration oder Dekantieren, erfolgen.

Beim Einsatz der erfindungsgemässen Erstarrungsbeschleuniger tritt nur ein geringer Abfall der Druckfestigkeit im Verlauf von 28 Tagen ein. Bekannte Erstarrungsbeschleuniger auf Basis von Natriumaluminat/Kaliumcarbonat/Kaliumhydroxid zeigen dagegen nach dem Erstarren einen Abfall der Druckfestigkeit, der 20% der ursprünglichen Werte überschreiten kann, die mit einem Beton ohne Beschleunigerzusatz erreicht wird. Im allgemeinen beträgt der Abfall mit den erfindungsgemässen Mischungen maximal nur bis zu 15% unter vergleichbaren Bedingungen.

Die Bindemittel, deren Abbinden mit Hilfe der erfindungsgemässen Beschleuniger verbessert werden, umfassen die hydraulischen Bindemittel auf Basis von Portlandzementen. Unter diesen Bindemitteln sollen auch solche verstanden werden, die ausser dem in dem Zement enthaltenen gemahlenen Klinker noch anorganische Zusatz- oder Zumahlstoffe enthalten, wie z.B. die Puzzalone, Hüttensand oder auch Flugasche. Zementhaltige Bindemittel, die eine oder mehrere dieser Zusatzstoffe enthalten, zeigen im erhöhten Mass den oben genannten Abfall der Druckfestigkeit nach 28 Tagen; der Einsatz der erfindungsgemässen Erstarrungsbeschleuniger ist deshalb besonders bei diesen Bindemitteln angezeigt, da dieser Festigkeitsabfall weitgehend vermieden wird.

Innerhalb des beanspruchten Bereichs des kaustischen Verhältnisses und der Verdünnung sind die erfindungsgemässen flüssigen Beschleuniger stabil und führen nicht zu Abfällungen. Bei den Grenzwerten ist jedoch darauf zu achten, dass bei hohen Werten für das kaustische Verhältnis auch eine entsprechend hohe Verdünnung innerhalb des beanspruchten Bereichs gewählt wird. Analoges gilt für die untere Grenze des kaustischen Verhältnisses. Die Variationsmöglichkeiten hinsichtlich kaustischem Verhältnis und Verdünnung erlauben also eine weitestgehende Anpassung an die Anforderungen für die Erstarrungsbeschleunigung bei unterschiedlich zusammengesetzten Bindemitteln. Beispiele für wirksame und stabile Formulierungen sind

| Bei-spiel | kaustisches Verhältnis $\dfrac{[K_2O] - [CO_2]}{[Al_2O_3]}$ | Verdünnung $\dfrac{[H_2O]}{[Al_2O_3]}$ | $[CO_2]$ |
|---|---|---|---|
| a) | 1,39 | 18,75 | 3,4 |
| b) | 1,22 | 11,91 | 0,31 |
| c) | 1,10 | 9,57 | 0,05 |

Neben den oben genannten Zuschlagstoffen enthalten die fertigen abzubindenden Abmischungen noch Sand oder andere bekannte Inertstoffe, deren Korngrösse in weiten Grenzen schwanken kann. Die mit Hilfe des erfindungsgemässen Erstarrungsbeschleunigers abzubindenden Abmischungen umfassen demzufolge alle bekannten Betonabmischungen, Mörtel und Schlämme, die hydraulische Bindemittel auf Basis von gemahlenem Klinker enthalten.

Die folgenden Beispiele zeigen die beschleunigende Wirkung der erfindungsgemässen Formulierungen auf das Erstarren von Zement und Mörtel.

*Beispiel 1*

Ein handelsüblicher Zement (Typ Z-35 F) als Prüfpaste mit einem Wasser/Zementwert von 0,32 bis 0,35 wurde mit 2 Gew.-% eines erfindungsgemässen Beschleunigers vermischt, dessen kaustisches Verhältnis bei 1,29 lag und der eine Verdünnung von 15,8 aufwies. Der Gehalt an $CO_2$ lag bei 2,16 Mol-%.

Die erhaltene Mischung hatte gemäss DIN 1164, Teil 5, einen Erstarrungsbeginn von 20 bis 60 sec und ein Erstarrungsende von 60 bis 210 sec bei einer Prüftemperatur von 239 ± 2 K.

*Beispiel 2*

In Anlehnung an die DIN 1164, Teil 7 wurden Mörtel aus 3 Teilen Sand, 1 Teil Portlandzement Z 35 F und soviel Wasser, dass der Wasser/Zementwert bei 0,59 bis 0,61 lag, hergestellt. Dem Anmachwasser waren 3 Gew.-%, bezogen auf den Zement, eines Erstarrungsbeschleunigers hinzugefügt, der ein kaustisches Verhältnis von 1,37 aufwies, eine Verdünnung von 17,06 und einen Gehalt von 2,78 Mol-% $CO_2$ hatte.

Bei einer Prüftemperatur von 293 ± 2 K betrugen die Erstarrungszeiten dieses Mörtels 30 bis 45 sec für den Beginn und 60 bis 90 sec für das normgerechte Ende.

*Beispiel 3*

Die Erstarrungsbeschleuniger können auch einem vorgefertigten Nassmörtel zugesetzt werden: Ein Nassmörtel entsprechend DIN 1164, Teil 7, wurde aus 3 Teilen Normensand und 1 Teil Portlandzement Z 35 F mit einem W/Z von 0,5 normgerecht zubereitet. Dem Nassmörtel wurden dann bei 293 ± 2 K 4% eines Erstarrungsbeschleunigers mit einem kaustischen Verhältnis von 1,37, einer Verdünnung von 17,06 und 2,78 Mol-% $CO_2$ rasch in konzentrierter Form beigemischt. Die Erstarrungszeiten betrugen 120 sec für den Beginn und 210 sec für das normgerechte Ende.

**Patentansprüche für die Vetragsstaaten:**
BE, CH, DE, FR, GB, IT, LI, LU, NL, SE

1. Flüssiger Erstarrungsbeschleuniger für Betonabmischungen auf der Basis von Alkalialuminat-, Alkalihydroxid- und Alkalicarbonatlösungen, gekennzeichnet als eine wässrige Lösung der entsprechenden Kaliumsalze mit der Bedingung, dass
a) Das molare Verhältnis des nicht an Kaliumcarbonat gebundenen $K_2O$ zu $Al_2O_3$ zwischen 1,1 und 1,4 liegt und
b) der Gehalt an Wasser als Lösungsmittel so bemessen ist, dass das molare Verhältnis $H_2O : Al_2O_3$ zwischen 9,5 und 20 beträgt und
c) der Gehalt an Kaliumcarbonat zwischen 0,05 und 3,4 Mol-% liegt.

2. Erstarrungsbeschleuniger gemäss Anspruch 1, gekennzeichnet durch ein molares Verhältnis des nicht an Kaliumcarbonat gebundenen $K_2O$ zu $Al_2O_3$ zwischen 1,25 und 1,37 und einem molaren Verhältnis $H_2O : Al_2O_3$ zwischen 14 und 17 vorliegt.

3. Verwendung von Erstarrungsbeschleunigern gemäss Ansprüchen 1 oder 2 in hydraulischen Bindemitteln auf Basis von, gegebenenfalls modifizierten, Portlandzementen zur Verkürzung der Abbindezeit des Bindemittels und zur Verbesserung der Druckfestigkeit der mit diesen Bindemitteln hergestellten Produkte.

**Patentansprüche für den Vertragsstaat: AT**

1. Verfahren zur Herstellung eines flüssigen Erstarrungsbeschleunigers für Betonabmischungen auf der Basis von Alkalialuminaten, Alkalihydroxiden und Alkalicarbonaten, dadurch gekennzeichnet, dass man eine vorgefertigte Kaliumaluminatlösung mit einem Molverhältnis $K_2O : Al_2O_3$ von 1,1 : 1 bis 1,4 : 1 mit soviel Kaliumcarbonat versetzt, dass der Gehalt an Kaliumcarbonat zwischen 0,05 und 3,4 Mol-% liegt, und den Wassergehalt der gesamten Lösung so einstellt, dass das molare Verhältnis $H_2O : Al_2O_3$ zwischen 9,5 : 1 und 20 : 1 liegt.

2. Verfahren gemäss Anspruch 1, dadurch gekennzeichnet, dass man eine Kaliumaluminatlösung einsetzt, die durch Aufschluss von Tonerdehydrat mit einer wässerigen, mehr als 30%igen KOH-Lösung erhalten wurde.

3. Verfahren gemäss Anspruch 1 oder 2, dadurch gekennzeichnet, dass das Kaliumcarbonat als konzentrierte wässrige Lösung eingesetzt wird.

4. Verfahren gemäss Anspruch 1 oder 2, dadurch gekennzeichnet, dass das Kaliumcarbonat als Sesquihydrat eingesetzt wird und anschliessend der gewünschte Wassergehalt eingestellt wird.

5. Verfahren gemäss einem der Ansprüche 1 bis 4, dadurch gekennzeichnet, dass die in den während des Prozesses erhaltenen Lösungen gegebenenfalls vorhandenen unerwünschten Umsetzungsprodukte auf an sich bekannte Weise während oder nach dem Herstellungsprozess abgetrennt werden.

**Claims for the contracting States:**
BE, CH, DE, FR, GB, IT, LI, LU, NL, SE

1. Liquid solidification accelerator for concrete mixes based on alkali aluminate, alkali hydroxide and alkali carbonate solutions, characterised as an aqueous solution of the corresponding potassium salts with the condition that
a) the molar ratio of the $K_2O$ not bonded in potassium carbonate to $Al_2O_3$ lies between 1.1 and 1.4 and
b) the content of water as solvent is so measured that the molar ratio $H_2O : Al_2O_3$ amounts to between 9.5 and 20 and
c) the content of potassium carbonate lies between 0.05 and 3.4 mol %.

2. Solidification accelerator according to claim 1, characterised by a molar ratio of the $K_2O$ not bonded in potassium carbonate to $Al_2O_3$ between 1.25 and 1.37 and a molar ratio $H_2O : Al_2O_3$ lying between 14 und 17.

3. Use of solidification accelerators according to claims 1 or 2 in hydraulic cementing materials based on, optionally modified, Portland cements for shortening of the setting time of the cementing material and for improvement of the compressive strength of the products produced with these cementing materials.

**Claims for the contracting State: AT**

1. Process for the production of a liquid solidification accelerator for concrete mixes based on alkali aluminates, alkali hydroxides and alkali carbonates, characterised in that a previously prepared potassium aluminate solution with a molar ratio of $K_2O : Al_2O_3$ of 1.1 : 1 to 1.4 : 1 is treated with so much potassium carbonate that the content of potassium carbonate lies between 0.05 and 3.4 mol % and the water content of the entire solution is so adjusted that the molar ratio $H_2O : Al_2O_3$ lies between 9.5 : 1 and 20 : 1.

2. Process according to claim 1, characterised in that a potassium aluminate solution is employed which was obtained by treatment of hydrated alumina with an aqueous more than 30% KOH solution.

3. Process according to claim 1 or 2, characterised in that the potassium carbonate is employed as concentrated aqueous solution.

4. Process according to claim 1 or 2, characterised in that the potassium carbonate is employed as sesquihydrate and the the desired water content is subsequently adjusted.

5. Process according to one of claims 1 to 4, characterised in that the undesired reaction products possibly present in the solutions obtained during the process are separated off in a manner known per se during or after the production process.

**Revendications pour les Etats contractants:**
BE, CH, DE, FR, GB, IT, LI, LU, NL, SE

1. Accélérateur de solidification liquide pour mélanges de béton, à base de solutions d'aluminate alcalin, d'hydroxyde alcalin et de carbonate alcalin, caractérisé par une solution aqueuse des sels potassiques correspondants, avec comme condition que

a) le rapport molaire du $K_2O$ non lié au carbonate de potassium envers $Al_2O_3$ se situe entre 1,1 et 1,4, que

b) la teneur en eau comme solvant soit réglée pour que le rapport molaire de $H_2O$ : $Al_2O_3$ soit compris entre 9,5 et 20 et que

c) la teneur en carbonate de potassium se situe entre 0,05 et 3,4 moles %.

2. Accélérateur de solidification selon la revendication 1, caractérisé par un rapport molaire du $K_2O$ non lié au carbonate de potassium envers $Al_2O_3$ qui se situe entre 1,25 et 1,37 et un rapport molaire $H_2O$ : $Al_2O_3$ entre 14 et 17.

3. Utilisation des accélérateurs de solidification selon les revendications 1 ou 2 dans des liants hydrauliques à base de ciment Portland, éventuellement modifiés, pour raccourcir le temps de prise du liant et pour améliorer la résistance à la pression des produits fabriqués avec ces liants.

**Revendications pour l'Etat contractant: AT**

1. Procédé de fabrication d'un accélérateur de solidification liquide pour mélanges de béton, à base d'aluminates alcalins, d'hydroxydes alcalins et de carbonates alcalins, caractérisé en ce qu'on ajoute à une solution d'aluminate de potassium préparée d'avance, ayant un rapport molaire $K_2O$ : $Al_2O_3$ de 1,1 : 1 à 1,45 : 1, une quantité suffisante de carbonate de potassium pour que la teneur en carbonate de potassium se situe entre 0,05 et 3,4 moles %, et en ce qu'on règle la teneur en eau de la solution totale pour que le rapport molaire $H_2O$ : $Al_2O_3$ se situe entre 9,5 : 1 et 20 : 1.

2. Procédé selon la revendication 1, caractérisé en ce qu'on utilise une solution d'aluminate de potassium qui a été obtenue par l'attaque de l'hydrate d'alumine avec une solution aqueuse à plus de 30% de KOH.

3. Procédé selon la revendication 1 ou 2, caractérisé en ce qu'on utilise le carbonate de potassium sous la forme d'une solution aqueuse concentrée.

4. Procédé selon la revendication 1 ou 2, caractérisé en ce qu'on utilise le carbonate de potassium sous la forme du sesquihydrate et en ce qu'on règle ensuite la teneur en eau désirée.

5. Procédé selon l'une des revendications 1 à 4, caractérisé en ce qu'on sépare d'une manière connue en elle-même les produits de réaction indésirables, éventuellement présents dans les solutions obtenues au cours du procédé, pendant ou après le processus de fabrication.